# EUROPEAN PATENT APPLICATION

(11) **EP 4 604 307 A1**
(43) Date of publication of application: **20.08.2025**
(21) Application number: 24221146.4
(22) Date of filing: 18.12.2024
(51) Int. Cl.: H01M 50/54, H01M 50/553, H01M 50/557, H01M 50/583, H01M 50/566, H01M 50/528, H01M 50/593

(54) **SECONDARY BATTERY**

(30) Priority: 15.02.2024 JP 2024021239
(71) Applicant: Prime Planet Energy & Solutions, Inc., Chuo-ku, Tokyo 103-0022 (JP)
(72) Inventor: TADA, Naoya, Tokyo, 103-0022 (JP); WAKIMOTO, Ryoichi, Tokyo, 103-0022 (JP); IMANISHI, Hiroaki, Tokyo, 103-0022 (JP)
(74) Representative: Kuhnen & Wacker Patent- und Rechtsanwaltsbüro PartG mbB

(57) **Abstract**

In this secondary battery, a first current collecting member (420) includes a first region (R1) and a second region (R2), a second current collecting member (440) includes a third region (R3) and a fourth region (R4), a positive electrode tab (250, 280) is connected to the first region (R1), the second region (R2) and the fourth region (R4) are joined to each other, and a first insulating member (460) is disposed between the first region (R1) and the third region (R3). According to this secondary battery, it is possible to provide a secondary battery having a higher volume energy density and higher reliability.

## Description

### CROSS REFERENCE TO RELATED APPLICATIONS

This nonprovisional application is based on Japanese Patent Application No. 2024-021239 filed on February 15, 2024 with the Japan Patent Office, the entire contents of which are hereby incorporated by reference.

### BACKGROUND OF THE INVENTION

### Field of the Invention

The present technology relates to a secondary battery.

### Description of the Background Art

Japanese Patent No. 4537353 discloses a prismatic battery in which a positive electrode terminal is provided on a side surface on one side and a negative electrode terminal is provided at an end portion on the other side in a battery case.

### SUMMARY OF THE INVENTION

A secondary battery having a higher volume energy density and higher reliability has been required, and there is room for further improvement in terms of a structure of a current collecting portion and an assembling method.

An object of the present technology is to provide a secondary battery having higher volume energy density and higher reliability.

The present technology provides the following secondary battery.
[1] A secondary battery comprising: an electrode assembly including a first electrode and a second electrode having a polarity different from a polarity of the first electrode; a case main body that accommodates the electrode assembly and that is provided with a first opening; a first sealing plate that seals the first opening; a first electrode tab electrically connected to the first electrode; a first current collecting member electrically connected to the first electrode tab; a second current collecting member joined to the first current collecting member; and a first electrode terminal electrically connected to the second current collecting member and provided on the first sealing plate, wherein the first current collecting member includes a first region and a second region, the second current collecting member includes a third region and a fourth region, the first electrode tab is connected to the first region, the second region and the fourth region are joined to each other, and a first insulating member is disposed between the first region and the third region.
[2] The secondary battery according to [1], wherein the first insulating member has a protruding portion protruding to the first sealing plate side, and the protruding portion is in abutment with the first sealing plate or another insulating member disposed on the first sealing plate.
[3] The secondary battery according to [2], wherein a second insulating member is disposed between the first sealing plate and the second current collecting member, the other insulating member is the second insulating member, and the protruding portion is in abutment with the second insulating member.
[4] The secondary battery according to [3], wherein the first insulating member is connected and fixed to the second insulating member.
[5] The secondary battery according to any one of [1] to [4], wherein the case main body is provided with a second opening at a position facing the first opening, and the second opening is sealed by a second sealing plate, a second electrode terminal electrically connected to the second electrode is provided on the second sealing plate, and the first electrode tab is provided at an end portion of the electrode assembly on the first sealing plate side, and a second electrode tab electrically connected to the second electrode is provided at an end portion of the electrode assembly on the second sealing plate side.
[6] The secondary battery according to any one of [1] to [5], comprising a first abutment portion at which the second region and the fourth region are in abutment with each other, wherein a joining portion at which the first current collecting member and the second current collecting member are joined to each other is provided at an end portion of the first abutment portion.
[7] The secondary battery according to any one of [1] to [6], wherein in a direction perpendicular to the first sealing plate, a surface of the second region on the first sealing plate side is located on the first sealing plate side with respect to a surface of the first region on the first sealing plate side.
[8] The secondary battery according to any one of [1] to [7], wherein the first insulating member includes a plate portion, the plate portion is provided with a recess, and at least a portion of the first current collecting member or the second current collecting member is disposed in the recess.
[9] The secondary battery according to any one of [1] to [8], wherein the first current collecting member has an inclined portion between the first region and the second region, a clearance formed between the inclined portion and the second current collecting member becomes gradually smaller toward the second region, and the clearance has a region in which the first insulating member is not disposed.
[10] The secondary battery according to any one of [1] to [9], wherein a fuse portion is provided in the first current collecting member or the second current collecting member.
[11] The secondary battery according to any one of [1] to [10], wherein in a direction perpendicular to the first sealing plate, a difference between a surface of the third region on the electrode assembly side and a surface of the fourth region on the electrode assembly side is ±0.5 mm or less.

The foregoing and other objects, features, aspects and advantages of the present invention will become more apparent from the following detailed description of the present invention when taken in conjoining portion with the accompanying drawings.

### BRIEF DESCRIPTION OF THE DRAWINGS

Fig. 1 is a front view showing a configuration of a secondary battery according to an embodiment.
Fig. 2 is a diagram showing a state in which the secondary battery shown in Fig. 1 is viewed in a direction of arrow II.
Fig. 3 is a diagram showing a state in which the secondary battery shown in Fig. 1 is viewed in a direction of arrow III.
Fig. 4 is a diagram showing a state in which the secondary battery shown in Fig. 1 is viewed in a direction of arrow IV.
Fig. 5 is a diagram showing a state in which the secondary battery shown in Fig. 1 is viewed in a direction of arrow V.
Fig. 6 is a front cross sectional view of the secondary battery shown in Fig. 1.
Fig. 7 is a cross sectional view of a negative electrode plate.
Fig. 8 is a front view showing the negative electrode plate.
Fig. 9 is a cross sectional view of a positive electrode plate.
Fig. 10 is a front view showing the positive electrode plate.
Fig. 11 is a cross sectional view of the secondary battery shown in Fig. 1 along XI-XI.
Fig. 12 is a cross sectional view of the secondary battery shown in Fig. 1 along XII-XII.
Fig. 13 is a flowchart showing a method of manufacturing a secondary battery according to one embodiment.
Fig. 14 is a perspective view showing a state before two electrode assemblies included in the secondary battery according to one embodiment are overlapped with each other.
Fig. 15 is a cross sectional view of each of the electrode assemblies and the current collectors shown in Fig. 14 along XV-XV.
Fig. 16 is a perspective view showing a state of attaching a holder and a spacer to the electrode assembly.
Fig. 17 is a perspective view showing a state of attaching a sealing plate to the current collectors on the negative electrode side.
Fig. 18 is a cross sectional view of each of the electrode assemblies and the current collectors shown in Fig. 17 along XVIII-XVIII.
Fig. 19 is a first perspective view showing an implementation of the spacer.
Fig. 20 is a second perspective view showing the implementation of the spacer.
Fig. 21 is a side view showing a positional relation between the spacer and an insulating sheet.
Fig. 22 is a perspective view showing a state of inserting the electrode assemblies into the case main body.
Fig. 23 is a perspective view showing a state of attaching a sealing plate to the current collectors on the positive electrode side.
Fig. 24 is a cross sectional view of each of the electrode assemblies and the current collectors shown in Fig. 23 along XXIV-XXIV.
Fig. 25 is a perspective view showing a configuration of the secondary battery.
Fig. 26 is a perspective view showing a state before fixing the sealing plate to the case main body.
Fig. 27 is a side view showing a current collecting structure on the positive electrode side.
Fig. 28 is a perspective view of the configuration shown in Fig. 27.
Fig. 29 is a cross sectional view along XXIX-XXIX in Fig. 28.
Fig. 30 is a perspective view of a first insulating member.

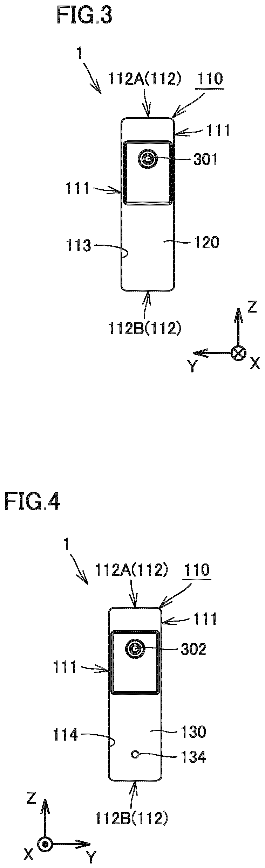

Fig. 3 1 is a perspective view of a second insulating member.

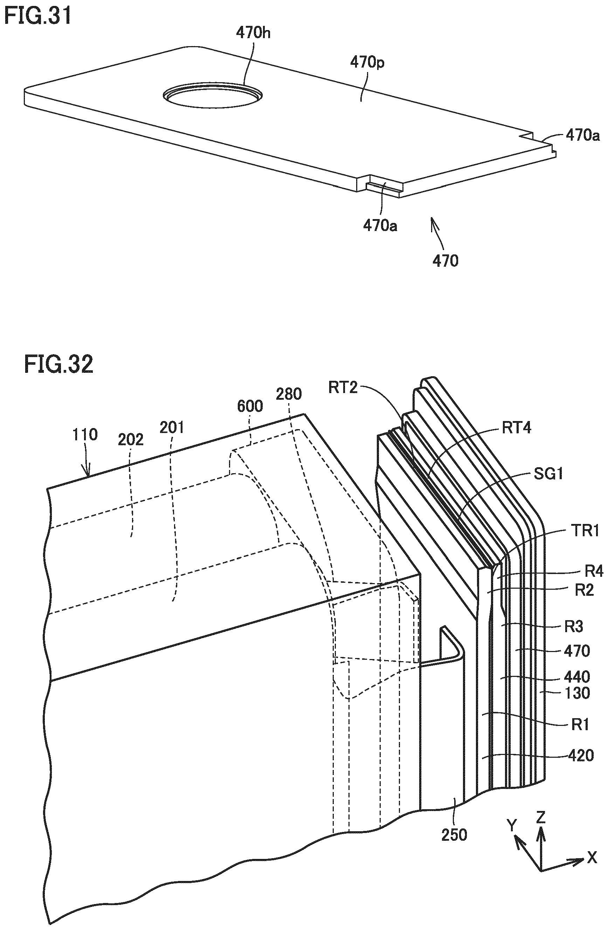

Fig. 32 is a first perspective view showing another implementation of the joining portion of the current collector.

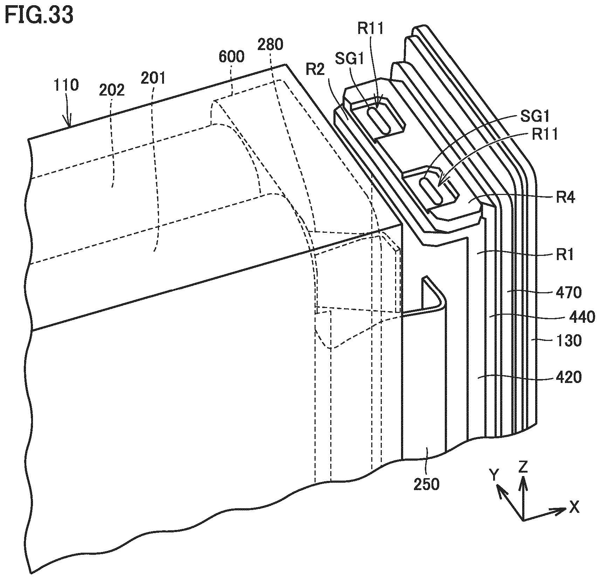

Fig. 33 is a second perspective view showing another implementation of the joining portion of the current collector.

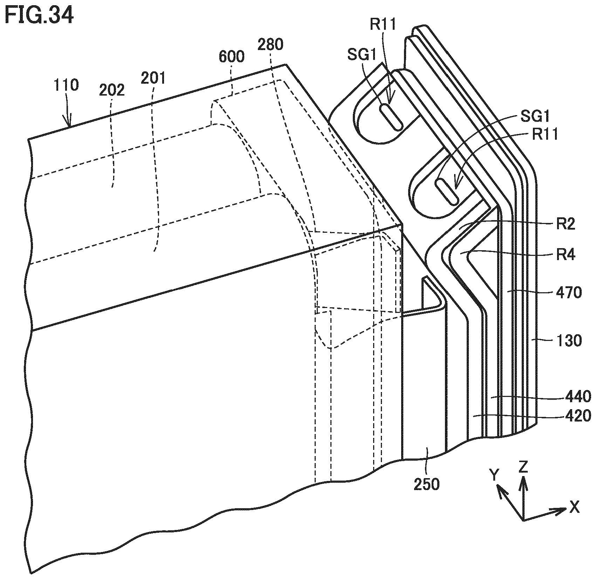

Fig. 34 is a third perspective view showing another implementation of the joining portion of the current collector.

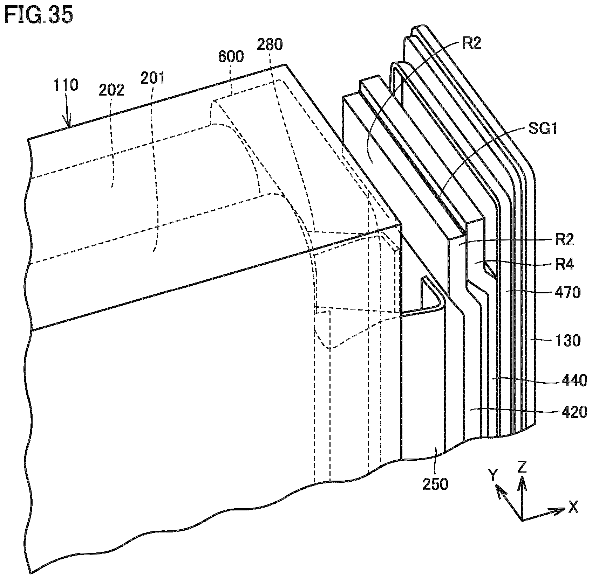

Fig. 35 is a fourth perspective view showing another implementation of the joining portion of the current collector.

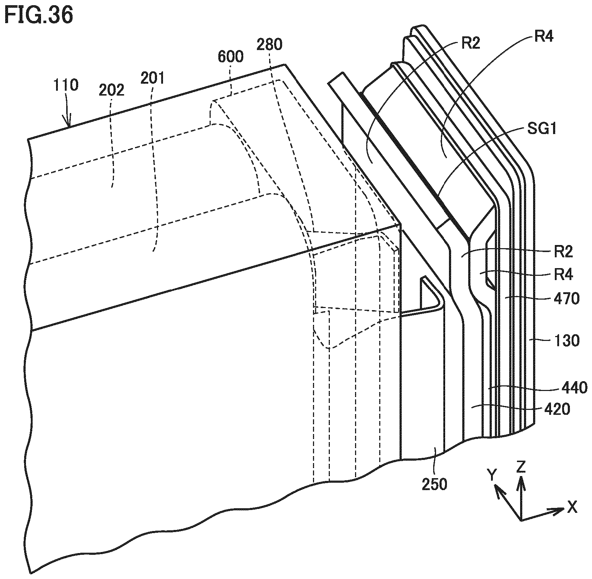

Fig. 36 is a fifth perspective view showing another implementation of the joining portion of the current collector.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

In the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

In the present specification, the terms "comprise", "include", and "have" are open-end terms. That is, when a certain configuration is included, a configuration other than the foregoing configuration may or may not be included.

In the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "secondary battery" is not limited to a lithium ion battery, and may include other secondary batteries such as a nickel-metal hydride battery and a sodium-ion battery. In the present specification, the term "electrode" may collectively represent a positive electrode and a negative electrode.

In the figures, when an electrode assembly included in the secondary battery is a stacked type electrode assembly, an X direction is defined as a long-side direction of a stacked surface, whereas when the electrode assembly is a wound type electrode assembly, the X direction is defined as a direction along a winding axis thereof. Further, a Y direction is defined as a short-side direction of the electrode assembly when viewed in the X direction, and a Z direction is defined as a long-side direction of the electrode assembly when viewed in the X direction. In order to facilitate understanding of the invention, the size of each configuration in the figures may be illustrated to be changed from its actual size.

In the specification of the present application, the first direction (X direction) may be referred to as a "width direction" of each of the secondary battery, the electrode assembly, and the case main body, the second direction (Z direction) may be referred to as a "height direction" of the secondary battery or the case main body, and the third direction (Y direction) may be referred to as a "thickness direction" of the secondary battery or the case main body.

### (Embodiment: Overall Configuration of Battery)

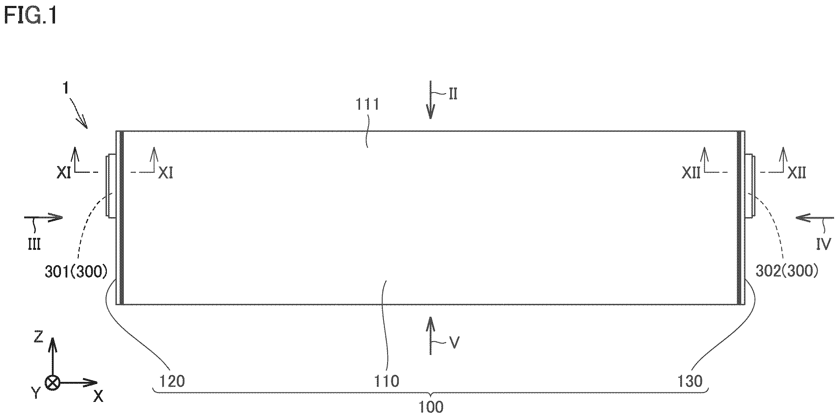

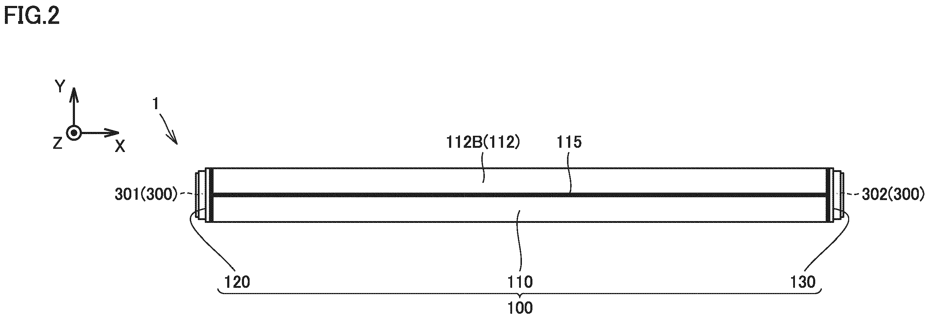

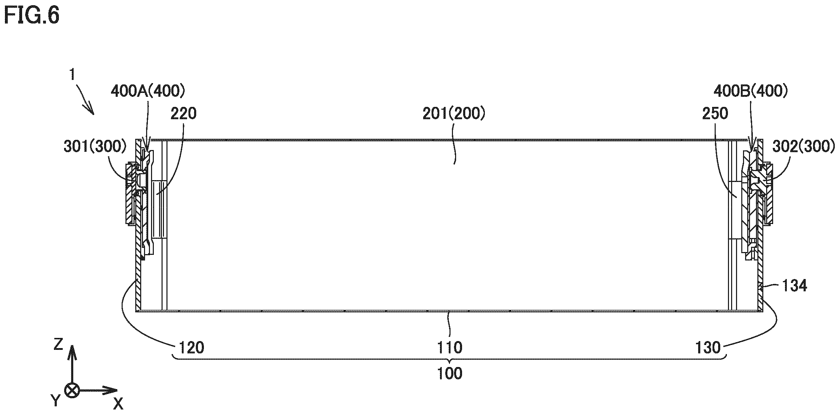

Fig. 1 is a front view of a secondary battery 1 according to the present embodiment. Figs. 2 to 5 are diagrams showing states of secondary battery 1 shown in Fig. 1 when viewed in directions of arrows II, III, IV, and V respectively. Fig. 6 is a front cross sectional view of secondary battery 1 shown in Fig. 1.

Secondary battery 1 can be mounted on a battery electric vehicle (BEV), a plug-in hybrid electric vehicle (PHEV), a hybrid electric vehicle (HEV), or the like. It should be noted that the purpose of use of secondary battery 1 is not limited to the use on a vehicle.

As shown in Figs. 1 to 6, secondary battery 1 includes a case 100, an electrode assembly 200, electrode terminals 300, and current collectors 400. Case 100 includes a case main body 110, a sealing plate 120 (first sealing plate), and a sealing plate 130 (second sealing plate).

When forming a battery assembly including secondary battery 1, a plurality of secondary batteries 1 are stacked in the thickness direction of each of the plurality of secondary batteries 1. Secondary batteries 1 stacked may be restrained in the stacking direction (Y direction) by a restraint member to form a battery module, or the battery assembly may be directly supported by a side surface of a case of a battery pack without using the restraint member.

Case main body 110 is constituted of a member having a tubular shape, preferably, a prismatic tubular shape. Thus, secondary battery 1 having a prismatic shape is obtained. Case main body 110 is composed of a metal. Specifically, case main body 110 is composed of aluminum, an aluminum alloy, iron, an iron alloy, or the like.

As shown in Figs. 1 and 2, sealing plate 120 (first wall) and sealing plate 130 (second wall) are provided at respective end portions of the case main body. Case main body 110 can be formed to have a prismatic tubular shape in, for example, the following manner: end sides of a plate-shaped member having been bent are brought into abutment with each other (joining portion 115 illustrated in Fig. 2) and are joined together (for example, laser welding). Each of the corners of the "prismatic tubular shape" may have a shape with a curvature. Moreover, the secondary battery in the present technology is not necessarily limited to the prismatic secondary battery.

In the present embodiment, case main body 110 is formed to be longer in the width direction (X direction) of secondary battery 1 than in each of the thickness direction (Y direction) and the height direction (Z direction) of secondary battery 1. The size (width) of case main body 110 in the X direction is preferably about 30 cm or more. In this way, secondary battery 1 can be formed to have a relatively large size (high capacity). The size (height) of case main body 110 in the Z direction is preferably about 20 cm or less, more preferably about 15 cm or less, and further preferably about 10 cm or less. Thus, (low-height) secondary battery 1 having a relatively low height can be formed, thus resulting in improved ease of mounting on a vehicle, for example.

Case main body 110 includes a pair of first side surface portions 111 and a pair of second side surface portions 112. The pair of first side surface portions 111 constitute parts of the side surfaces of case 100. The pair of second side surface portions 112 constitute the bottom surface portion and upper surface portion of case 100. The pair of first side surface portions 111 and the pair of second side surface portions 112 are provided to intersect each other. The pair of first side surface portions 111 and the pair of second side surface portions 112 are connected at their respective end portions. Each of the pair of first side surface portions 111 desirably has an area larger than that of each of the pair of second side surface portions 112.

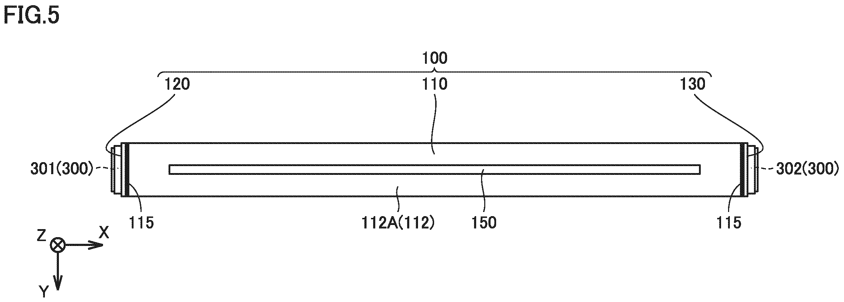

As shown in Fig. 5, a gas-discharge valve 150 is provided in one second side surface portion 112A of the pair of second side surface portions 112. Gas-discharge valve 150 extends in the width direction (X direction) of secondary battery 1. Gas-discharge valve 150 extends from the center of case main body 110 in the X direction to such an extent that gas-discharge valve 150 does not reach both ends of case main body 110 in the X direction. The shape of gas-discharge valve 150 can be changed appropriately.

The thickness of the plate-shaped member in gas-discharge valve 150 is thinner than the thickness of the plate-shaped member of case main body 110 other than gas-discharge valve 150. Thus, when the pressure in case 100 becomes equal to or more than a predetermined value, gas-discharge valve 150 is fractured prior to the other portions of case main body 110, thereby discharging the gas in case 100 to the outside.

As shown in Fig. 2, joining portion 115 is formed at the other second side surface portion 112B of the pair of second side surface portions 112. Joining portion 115 extends in the width direction (X direction) of secondary battery 1. At joining portion 115, the end sides of the plate-shaped member of case main body 110 are joined to each other.

As shown in Fig. 3, an opening 113 (second opening) is provided at an end portion of case main body 110 on a first side in the first direction (X direction). Opening 113 is sealed by sealing plate 120. Joining portion 115 is formed at opening 113 so as to seal opening 113. Each of opening 113 and sealing plate 120 has a substantially rectangular shape in which the Y direction corresponds to its short-side direction and the Z direction corresponds to its long-side direction. The substantially rectangular shape includes a rectangular shape or a generally rectangular shape such as a rectangular shape having corners each with a curvature.

Sealing plate 120 (second sealing plate) is provided with a negative electrode terminal 301. The position of negative electrode terminal 301 can be appropriately changed.

As shown in Fig. 4, an opening 114 (first opening) is provided at an end portion of case main body 110 on a second side opposite to the first side in the first direction (X direction). That is, opening 114 is located at an end portion opposite to opening 113, and openings 113 and 114 face each other. Opening 114 is sealed by sealing plate 130. Joining portion 115 is formed at opening 114 so as to seal opening 114. Each of opening 114 and sealing plate 130 has a substantially rectangular shape in which the Y direction corresponds to its short-side direction and the Z direction corresponds to its long-side direction.

Sealing plate 130 (first sealing plate) is provided with a positive electrode terminal 302 and an injection hole 134. The positions of positive electrode terminal 302 and injection hole 134 can be appropriately changed.

Each of sealing plate 120 and sealing plate 130 is composed of a metal. Specifically, each of sealing plate 120 and sealing plate 130 is composed of aluminum, an aluminum alloy, iron, an iron alloy, or the like.

Negative electrode terminal 301 (second electrode terminal) is electrically connected to a negative electrode of electrode assembly 200. Negative electrode terminal 301 is attached to sealing plate 120, i.e., case 100.

Positive electrode terminal 302 (first electrode terminal) is electrically connected to a positive electrode of electrode assembly 200. Positive electrode terminal 302 is attached to sealing plate 130, i.e., case 100.

Negative electrode terminal 301 is composed of a conductive material (more specifically, a metal), and can be composed of copper, a copper alloy, or the like, for example. A portion or layer composed of aluminum or an aluminum alloy may be provided at a portion of an outer surface of negative electrode terminal 301.

Positive electrode terminal 302 is composed of a conductive material (more specifically, a metal), and can be composed of aluminum, an aluminum alloy, or the like, for example.

Injection hole 134 is sealed by a sealing member (not shown). As the sealing member, for example, a blind rivet or another metal member can be used.

Electrode assembly 200 is an electrode assembly having a flat shape and having a below-described positive electrode plate and a below-described negative electrode plate stacked on each other. Specifically, electrode assembly 200 is a stacked type electrode assembly in which a plurality of positive electrode plates and a plurality of negative electrode plates are alternately stacked with below-described separators 800 being interposed therebetween. However, in the present specification, the "electrode assembly" is not limited to the stacked type electrode assembly, and may be a wound type electrode assembly in which a strip-shaped positive electrode plate and a strip-shaped negative electrode plate are wound together with a strip-shaped separator being interposed therebetween. The separator can be constituted of, for example, a microporous membrane composed of polyolefin. When the electrode assembly is the stacked type electrode assembly including the plurality of positive electrode plates and the plurality of negative electrode plates, positive electrode tabs provided on the positive electrode plates may be stacked to form a positive electrode tab group, and negative electrode tabs provided on the negative electrode plates may be stacked to form a negative electrode tab group.

As shown in Fig. 6, case 100 accommodates electrode assembly 200. Fig. 6 illustrates a first electrode assembly 201 described below. First electrode assembly 201 is accommodated in case 100 such that the long-side direction thereof is parallel to the X direction.

Specifically, one or a plurality of the stacked type electrode assemblies and an electrolyte solution (electrolyte) (not shown) are accommodated inside a below-described insulating sheet 700 disposed in case 100. As the electrolyte solution (non-aqueous electrolyte solution), it is possible to use, for example, a solution obtained by dissolving LiPF₆ at a concentration of 1.2 mol/L in a non-aqueous solvent obtained by mixing ethylene carbonate (EC), ethyl methyl carbonate (EMC), and dimethyl carbonate (DMC) at a volume ratio (25°C) of 30:30:40. Instead of the electrolyte solution, a solid electrolyte may be used.

First electrode assembly 201 includes a main body portion having a substantially rectangular shape, a negative electrode tab group 220 (second electrode tab group), and a positive electrode tab group 250 (first electrode tab group).

The main body portion is constituted of a below-described negative electrode plate 210 and a below-described positive electrode plate 240. Negative electrode tab group 220 is located at an end portion of first electrode assembly 201 on the first side with respect to the main body portion thereof in the first direction (X direction). The first side in the present embodiment is the sealing plate 120 side. Positive electrode tab group 250 is located at an end portion of first electrode assembly 201 on the second side with respect to the main body portion thereof in the first direction (X direction). The second side in the present embodiment is the sealing plate 130 side.

Each of negative electrode tab group 220 and positive electrode tab group 250 is formed to protrude from a central portion of electrode assembly 200 toward sealing plate 120 or sealing plate 130.

Current collectors 400 include a negative electrode current collector 400A and a positive electrode current collector 400B. Each of negative electrode current collector 400A and positive electrode current collector 400B is constituted of a plate-shaped member. Electrode assembly 200 is electrically connected to negative electrode terminal 301 and positive electrode terminal 302 through current collectors 400.

Negative electrode current collector 400A is disposed on sealing plate 120 with an insulating member composed of a resin being interposed therebetween. Negative electrode current collector 400A is electrically connected to negative electrode tab group 220 and negative electrode terminal 301. Negative electrode current collector 400A is composed of a conductive material (more specifically, a metal), and can be composed of copper, a copper alloy, or the like, for example. Details of negative electrode current collector 400A will be described later.

Positive electrode current collector 400B is disposed on sealing plate 130 with an insulating member composed of a resin being interposed therebetween. Positive electrode current collector 400B is electrically connected to positive electrode tab group 250 and positive electrode terminal 302. Positive electrode current collector 400B is composed of a conductive material (more specifically, a metal), and can be composed of aluminum, an aluminum alloy, or the like, for example. Positive electrode tab group 250 may be electrically connected to sealing plate 130 directly or via positive electrode current collector 400B. In this case, sealing plate 130 may serve as positive electrode terminal 302. Details of positive electrode current collector 400B will be described later.

### (Configuration of Electrode Assembly 200)

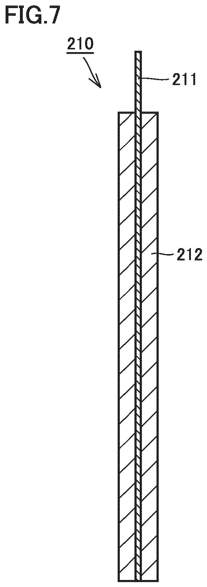

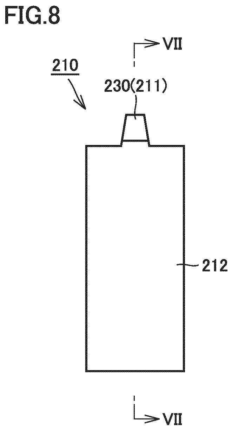

Fig. 7 is a cross sectional view of negative electrode plate 210 (cross sectional view along VII-VII in Fig. 8), and Fig. 8 is a front view showing negative electrode plate 210.

As shown in Fig. 8, a negative electrode tab 230 (second electrode tab) constituted of a negative electrode core body 211 is provided at one end portion, in the width direction, of negative electrode plate 210. When negative electrode plates 210 are stacked, a plurality of negative electrode tabs 230 are stacked to form negative electrode tab group 220. The length of each of the plurality of negative electrode tabs 230 in the plurality of negative electrode plates 210 in the protruding direction is appropriately adjusted in consideration of the state in which negative electrode tab group 220 is connected to negative electrode current collector 400A. The shape of negative electrode tab 230 is not limited to the one illustrated in Fig. 7.

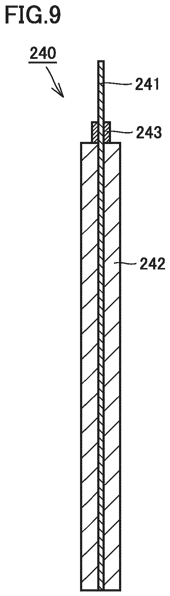

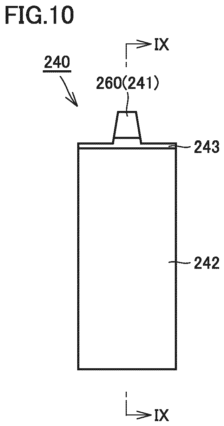

Fig. 9 is a cross sectional view of positive electrode plate 240 (cross sectional view along IX-IX in Fig. 10), and Fig. 10 is a front view showing positive electrode plate 240.

As shown in Fig. 10, a positive electrode tab 260 (first electrode tab) constituted of a positive electrode core body 241 is provided at one end portion, in the width direction, of positive electrode plate 240 formed. When positive electrode plates 240 are stacked, a plurality of positive electrode tabs 260 are stacked to form positive electrode tab group 250. The length of each of positive electrode tabs 260 in the plurality of positive electrode plates 240 in the protruding direction is appropriately adjusted in consideration of the state in which positive electrode tab group 250 is connected to positive electrode current collector 400B. The shape of positive electrode tab 260 is not limited to the one illustrated in Fig. 10.

A positive electrode protective layer 243 is provided at the root of positive electrode tab 260. Positive electrode protective layer 243 may not necessarily be provided at the root of positive electrode tab 260.

In a typical example, the thickness of (one) negative electrode tab 230 is smaller than the thickness of (one) positive electrode tab 260. In this case, the thickness of negative electrode tab group 220 is smaller than the thickness of positive electrode tab group 250.

### (Connection Structure between Electrode Assembly 200 and Current Collector 400)

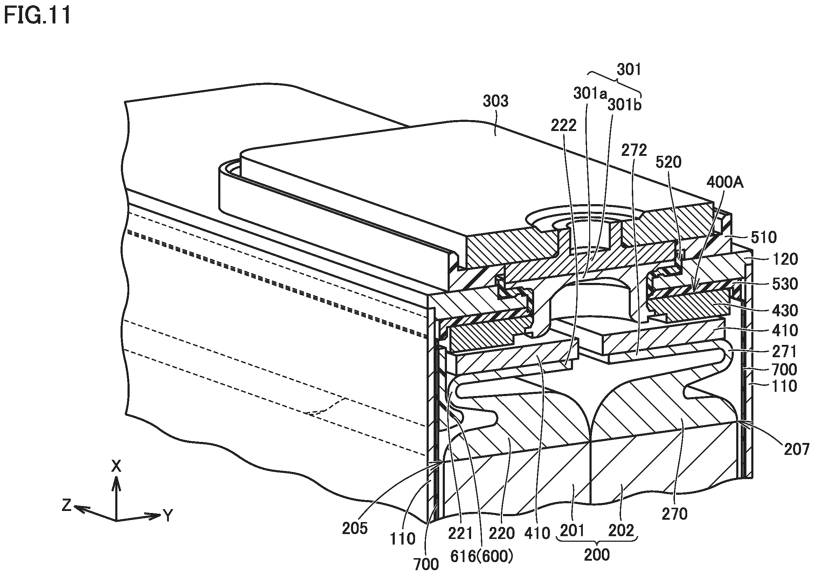

Fig. 11 is a cross sectional view of the secondary battery shown in Fig. 1 along XI-XI. As shown in Fig. 11, electrode assembly 200 includes first electrode assembly 201 and a second electrode assembly 202. Each of first electrode assembly 201 and second electrode assembly 202 includes a positive electrode (first electrode) and a negative electrode (second electrode). Electrode assembly 200 may be constituted of three or more electrode assemblies.

Electrode assembly 200 is formed by overlapping first electrode assembly 201 and second electrode assembly 202 with each other. First electrode assembly 201 and second electrode assembly 202 are arranged side by side in the thickness direction (Y direction) of each of first electrode assembly 201 and second electrode assembly 202.

First electrode assembly 201 includes negative electrode tab group 220. Negative electrode tab group 220 is electrically connected to one current collector 410 (negative electrode current collector) at its first end portion 205 in the X direction. Second electrode assembly 202 includes a negative electrode tab group 270. Negative electrode tab group 270 is electrically connected to the other current collector 410 (negative electrode current collector) at its third end portion 207 in the X direction.

Negative electrode tab group 220 has a curved portion 221 and a tip portion 222. Curved portion 221 is a portion at which negative electrode tab group 220 is curved on the side, on which the second electrode is connected, with respect to tip portion 222. Tip portion 222 is a portion located at an end portion of negative electrode tab group 220 on the side opposite to the side on which the second electrode is connected.

Negative electrode tab group 270 has a curved portion 271 and a tip portion 272. Curved portion 271 is a portion at which negative electrode tab group 270 is curved on the side, on which the second electrode is connected, with respect to tip portion 272. Tip portion 272 is a portion located at an end portion of negative electrode tab group 270 on the side opposite to the side on which the second electrode is connected.

Negative electrode tab group 220 and negative electrode tab group 270 are curved in opposite directions such that tip portions 222, 272 are close to each other. Tip portions 222, 272 are separated from each other in the present embodiment; however, it is not limited to this configuration, and tip portions 222, 272 may be in contact with each other.

Negative electrode current collector 400A electrically connects negative electrode terminal 301 to negative electrode tab group 220 and negative electrode tab group 270. Negative electrode current collector 400A in the present embodiment is connected to negative electrode terminal 301 between electrode assembly 200 and sealing plate 120.

Negative electrode current collector 400A includes two current collectors 410 and a current collector 430. Each of current collectors 410 is a plate-shaped member. Current collector 410 has a long-side direction in the Z direction and a short-side direction in the Y direction. Current collector 430 is a plate-shaped member. Current collector 430 has a long-side direction in the Z direction and a short-side direction in the Y direction. Current collector 410 and current collector 430 are arranged side by side in parallel in the X direction. In this way, current collector 410 and current collector 430 are constituted of separate components.

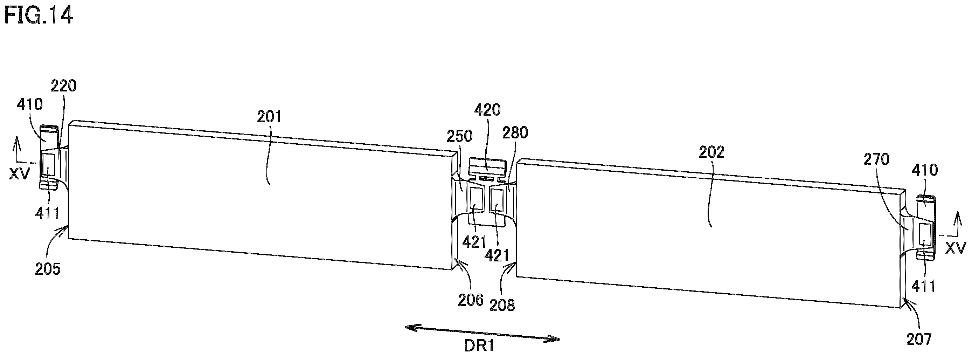

Negative electrode tab group 220 is joined to one current collector 410 at a joining location 411 (see Fig. 14) described later. Negative electrode tab group 270 is joined to the other current collector 410 at a joining location 411 (see Fig. 14) described later. Each of joining locations 411 may be formed by ultrasonic welding, resistance welding, laser welding, swaging, or the like, for example. In the present embodiment, negative electrode tab group 220 and one current collector 410 are joined by ultrasonic joining, and negative electrode tab group 270 and the other current collector 410 are joined by ultrasonic joining, for example.

Current collector 430 is joined to each of one current collector 410 and the other current collector 410 at a joining location (not shown) located at its end portion in the Z direction. Current collector 430 is connected to negative electrode terminal 301.
The connection between current collector 430 and negative electrode terminal 301 may be formed by swaging and/or welding, for example.

Negative electrode terminal 301 is located on the outer side with respect to sealing plate 120. Negative electrode terminal 301 is connected to a plate-shaped member 303. It should be noted that negative electrode terminal 301 preferably includes a region 301a composed of copper or a copper alloy and a region 301b composed of aluminum or an aluminum alloy, and region 301a composed of copper or a copper alloy is preferably connected to current collector 430.

Plate-shaped member 303 is located on the outer side with respect to sealing plate 120. Plate-shaped member 303 is disposed along sealing plate 120. Plate-shaped member 303 has electric conductivity. Plate-shaped member 303 is disposed to secure an area of connection with a bus bar or the like that electrically connects secondary battery 1 and another secondary battery adjacent thereto. The connection between negative electrode terminal 301 and plate-shaped member 303 can be formed by, for example, laser welding or the like.

A third insulating member 510 is disposed between plate-shaped member 303 and sealing plate 120. A fourth insulating member 520 is disposed between negative electrode terminal 301 and sealing plate 120. A fifth insulating member 530 is disposed between current collector 430 and sealing plate 120.

It should be noted that negative electrode terminal 301 may be electrically connected to sealing plate 120. Further, sealing plate 120 may function as negative electrode terminal 301.

A below-described spacer 600 (first spacer) is disposed between sealing plate 120 and the main body portion (negative electrode tab group 220 is not included) of electrode assembly 200. Spacer 600 is composed of a resin member having an insulating property. Negative electrode tab group 220 passes internal to spacer 600, thereby protecting negative electrode tab group 220 by spacer 600. It should be noted that it is also possible to employ a configuration in which spacer 600 (first spacer) is not provided.

Although a detailed structure of spacer 600 will be described later, spacer 600 is provided with a protrusion 616 protruding in the Y direction. With this protrusion 616 of spacer 600, spacer 600 functions as a guide to facilitate curving of curved portions 221, 271 when forming curved portions 221, 271.

Insulating sheet 700 (electrode assembly holder) composed of a resin is disposed between electrode assembly 200 and case main body 110. Insulating sheet 700 may be composed of, for example, a resin. More specifically, the material of insulating sheet 700 is, for example, polypropylene (PP), polyethylene terephthalate (PET), polyphenylene sulfide (PPS), polyimide (PI), or polyolefin (PO).

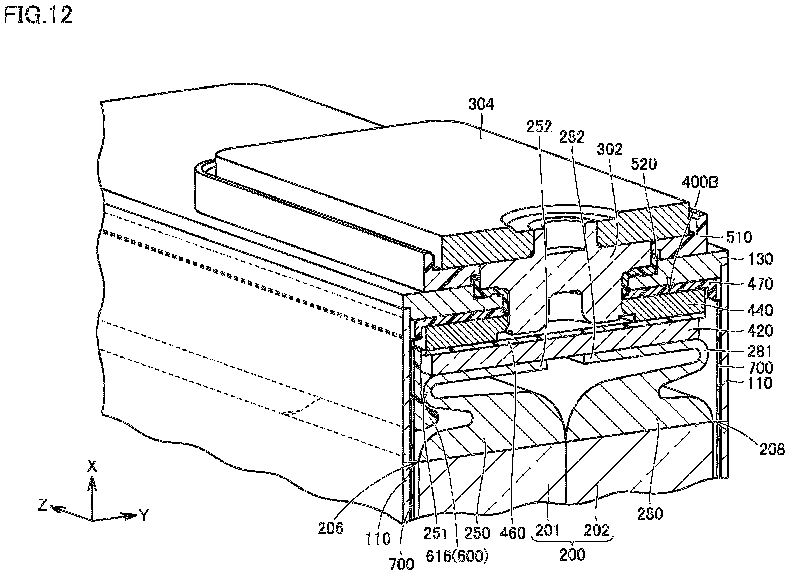

Fig. 12 is a cross sectional view of the secondary battery shown in Fig. 1 along XII-XII. The connection structure between electrode assembly 200 and current collector 400 on the positive electrode side of secondary battery 1 according to the present embodiment is different from that of the configuration on the negative electrode side in the following point: a portion corresponding to one current collector 410 and the other current collector 410 on the negative electrode side is constituted of a single component.

First electrode assembly 201 includes positive electrode tab group 250. Positive electrode tab group 250 is electrically connected to current collector 420 (positive electrode current collector) at its second end portion 206 in the X direction. Second electrode assembly 202 includes a positive electrode tab group 280. Positive electrode tab group 280 is electrically connected to current collector 420 (positive electrode current collector) at its fourth end portion 208 in the X direction.

Positive electrode tab group 250 has a curved portion 251 and a tip portion 252. Curved portion 251 is a portion at which positive electrode tab group 250 is curved on the side, on which the second electrode is connected, with respect to tip portion 252. Tip portion 252 is a portion located at an end portion of positive electrode tab group 250 on the side opposite to the side on which the second electrode is connected.

Positive electrode tab group 280 has a curved portion 281 and a tip portion 282. Curved portion 281 is a portion at which positive electrode tab group 280 is curved on the side, on which the second electrode is connected, with respect to tip portion 282. Tip portion 282 is a portion located at an end portion of positive electrode tab group 280 on the side opposite to the side on which the second electrode is connected.

Positive electrode tab group 250 and positive electrode tab group 280 are curved in opposite directions such that tip portions 252, 282 are close to each other. Tip portions 252, 272 are separated from each other in the present embodiment; however, it is not limited to this configuration, and tip portions 252, 282 may be in contact with each other.

Positive electrode current collector 400B electrically connects positive electrode terminal 302 to positive electrode tab group 250 and positive electrode tab group 280. Positive electrode current collector 400B in the present embodiment is connected to positive electrode terminal 302 between electrode assembly 200 and sealing plate 130.

Positive electrode current collector 400B includes current collector 420 (first current collecting member) and a current collector 440 (second current collecting member). Although first insulating member 460 is interposed between current collector 420 and current collector 440, current collector 420 and current collector 440 are electrically joined to each other at a position different from the cross section shown in the figure. Details will be described later.

Current collector 420 is a plate-shaped member. Current collector 420 has a long-side direction in the Z direction and a short-side direction in the Y direction. Current collector 420 is constituted of a single component in one piece.

Positive electrode tab group 250 and positive electrode tab group 280 are joined, at below-described joining locations 421 (see Fig. 14), to current collector 420 constituted of the single component. Each of joining locations 421 may be formed by ultrasonic welding, resistance welding, laser welding, swaging, or the like, for example. In the present embodiment, positive electrode tab group 250 and positive electrode tab group 280 are joined to current collector 420 by ultrasonic joining, for example.

Current collector 440 is joined to current collector 420 at a joining location (not shown) located at its end portion in the Z direction. Current collector 440 is connected to positive electrode terminal 302. The connection between current collector 440 and positive electrode terminal 302 may be formed by swaging and/or welding, for example.

Positive electrode terminal 302 is provided to be exposed to the outside of sealing plate 130 and reach current collector 440 of positive electrode current collector 400B provided on the inner surface side of sealing plate 130. Positive electrode terminal 302 is connected to a plate-shaped member 304.

Plate-shaped member 304 is located on the outer side with respect to sealing plate 130. Plate-shaped member 304 is disposed along sealing plate 130. Plate-shaped member 304 has electric conductivity. Plate-shaped member 304 is disposed to secure an area of connection with a bus bar or the like that electrically connects secondary battery 1 and another secondary battery adjacent thereto. The connection between positive electrode terminal 302 and plate-shaped member 304 may be formed by, for example, laser welding or the like.

A third insulating member 510 is disposed between plate-shaped member 304 and sealing plate 130. A fourth insulating member 520 is disposed between positive electrode terminal 302 and sealing plate 130. A second insulating member 470 is disposed between current collector 440 and sealing plate 130.

It should be noted that positive electrode terminal 302 may be electrically connected to sealing plate 130. Further, sealing plate 130 may function as positive electrode terminal 302.

A spacer 600 (second spacer) is disposed between sealing plate 130 and the main body portion (positive electrode tab groups 250, 280 are not included) of electrode assembly 200. Spacer 600 is composed of a resin member having an insulating property. Since each of positive electrode tab groups 250, 280 passes internal to spacer 600, each of positive electrode tab groups 250, 280 is protected by spacer 600. It should be noted that it is also possible to employ a configuration in which spacer 600 (second spacer) is not provided.

Although a detailed structure of spacer 600 will be described later, spacer 600 is provided with a protrusion 616 protruding in the Y direction. With this protrusion 616 of spacer 600, spacer 600 functions as a guide to facilitate curving of curved portions 251, 281 when forming curved portions 251, 281.

Insulating sheet 700 (electrode assembly holder) composed of a resin as described above is disposed between electrode assembly 200 and case main body 110.

### (Manufacturing Process for Secondary Battery 1)

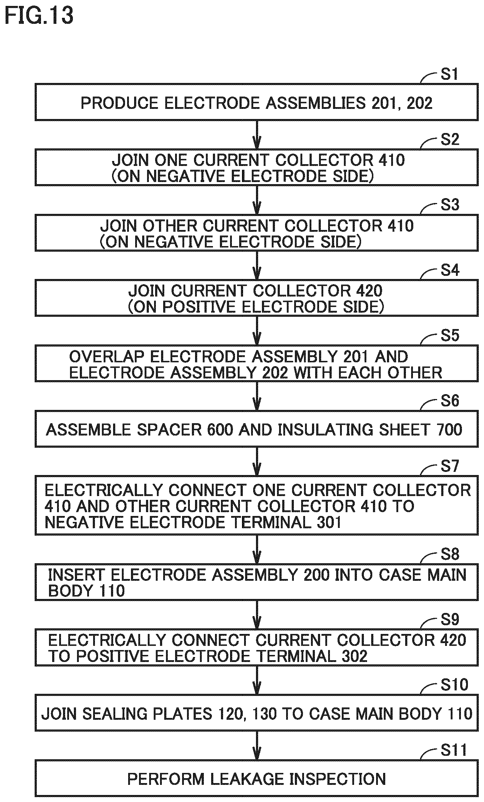

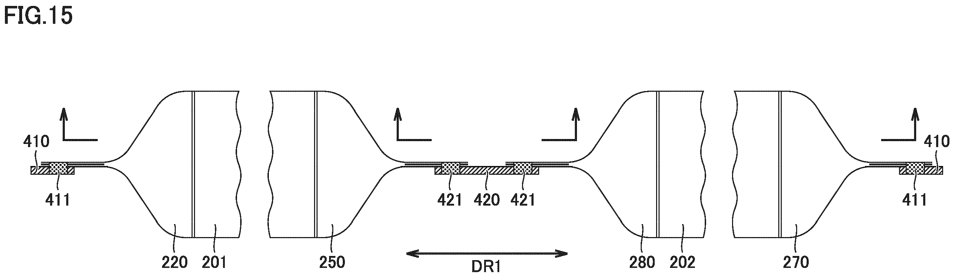

Hereinafter, a method of manufacturing the secondary battery according to the present embodiment will be described. Fig. 13 is a flowchart showing a method of manufacturing the secondary battery according to the first embodiment. Fig. 14 is a perspective view showing a state before two electrode assemblies included in the secondary battery according to the first embodiment are overlapped with each other. Fig. 15 is a cross sectional view of each of the electrode assemblies and the current collectors shown in Fig. 14 along XV-XV.

As shown in Fig. 13, in the method of manufacturing the secondary battery according to the present embodiment, first, first electrode assembly 201 and second electrode assembly 202 are produced (step S1). Parts of the tips of negative electrode tab group 220, positive electrode tab group 250, negative electrode tab group 270, and positive electrode tab group 280 are preferably cut such that they have the same tip length when bundled.

As shown in Figs. 13 to 15, after producing first electrode assembly 201 and second electrode assembly 202, negative electrode tab group 220 is joined to one current collector 410 (step S2). Negative electrode tab group 220 is joined to one current collector 410 at joining location 411. Next, negative electrode tab group 270 is joined to the other current collector 410 (step S3). Negative electrode tab group 270 is joined to the other current collector 410 at joining location 411.

Next, first electrode assembly 201, current collector 420, and second electrode assembly 202 are disposed side by side in this order in the first direction (DR1 direction). Positive electrode tab group 250 is disposed on one side with respect to current collector 420 in the first direction (DR1 direction). Positive electrode tab group 250 and positive electrode tab group 280 are joined to current collector 420 with positive electrode tab group 280 being disposed on the other side with respect to current collector 420 in the first direction (DR1 direction) (step S4). Positive electrode tab group 250 and positive electrode tab group 280 are joined to current collector 420 at joining locations 421.

In the height direction of each of first electrode assembly 201 and second electrode assembly 202, each of one current collector 410, the other current collector 410 and current collector 420 is disposed on one side with respect to the center of each of first electrode assembly 201 and second electrode assembly 202. Thus, each of the current collectors can be formed to be short, thereby reducing the size of the current collector.

Each of one current collector 410, the other current collector 410, and current collector 420 is not limited to this configuration. In the height direction of each of first electrode assembly 201 and second electrode assembly 202, each of current collectors 410 and current collector 420 may be disposed at the center of a corresponding one of first electrode assembly 201 and second electrode assembly 202. In this case, in the height direction of each of first electrode assembly 201 and second electrode assembly 202, each of negative electrode tab group 220, positive electrode tab group 250, negative electrode tab group 270, and positive electrode tab group 280 is disposed at the center of a corresponding one of first electrode assembly 201 and second electrode assembly 202 so as to correspond to a corresponding one of current collectors 410 and current collector 420.

The order of the steps of joining current collectors 410 and current collector 420 to first electrode assembly 201 and second electrode assembly 202 is not limited to the one described above, and the order may be changed. Each of the respective steps of joining current collectors 410 to first electrode assembly 201 and second electrode assembly 202 is preferably performed before the below-described step of overlapping first electrode assembly 201 and second electrode assembly 202 with each other, and is preferably performed before the step of joining current collector 420 to first electrode assembly 201 and second electrode assembly 202.

Next, after joining positive electrode tab group 250 and positive electrode tab group 280 to current collector 420, positive electrode tab group 250 and positive electrode tab group 280 are bent in the thickness direction (direction orthogonal to the DR1 direction in Figs. 14 and 15) of each of first electrode assembly 201 and second electrode assembly 202, thereby overlapping first electrode assembly 201 and second electrode assembly 202 with each other (step S5). That is, first electrode assembly 201 and second electrode assembly 202 are collected together.

Regarding the expression "overlapping the first electrode assembly and the second electrode assembly with each other", the first electrode assembly and the second electrode assembly may be overlapped with each other directly, or another member may be disposed between the first electrode assembly and the second electrode assembly. Further, the first electrode assembly and the second electrode assembly may or may not be fixed by a tape or the like. Further, the first electrode assembly, the current collector, and the second electrode assembly may not be disposed on a straight line in the first direction (DR1 direction), and the first electrode assembly or the second electrode assembly may be inclined with respect to the current collector in the first direction (DR1 direction).

Positive electrode tab group 250 and positive electrode tab group 280 are folded such that tip portions thereof face each other. Similarly, negative electrode tab group 220 and negative electrode tab group 270 are also folded such that tip portions thereof face each other.

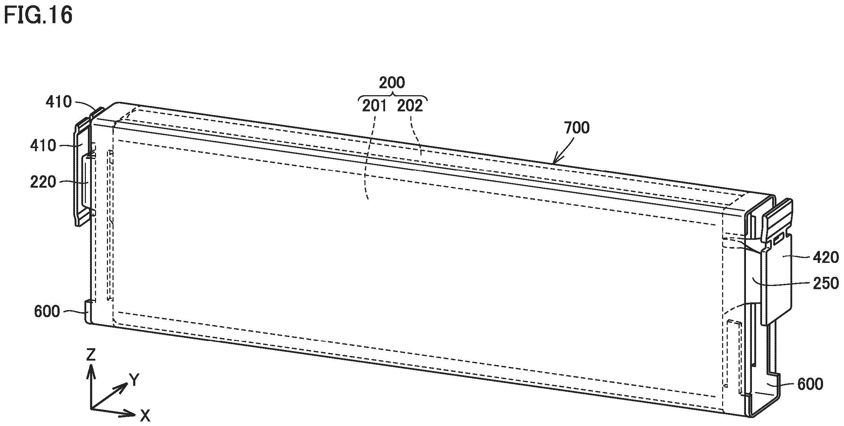

Each of Figs. 13 and 16 is a perspective view showing a state of attaching the holder and the spacer to the electrode assembly. As shown in Fig. 16, next, spacer 600 and insulating sheet 700 are assembled to electrode assembly 200 (step S6).

Insulating sheet 700 does not necessarily need to cover a whole of the surfaces of electrode assembly 200. Insulating sheet 700 preferably covers an area of about 50% or more, more preferably about 70% or more, of the outer surfaces of the electrode assembly. Insulating sheet 700 preferably covers a whole of at least four surfaces of the six surfaces of electrode assembly 200 having a substantially rectangular parallelepiped shape (flat shape) other than the two surfaces thereof on which negative electrode tab group 220 and positive electrode tab group 250 are formed respectively.

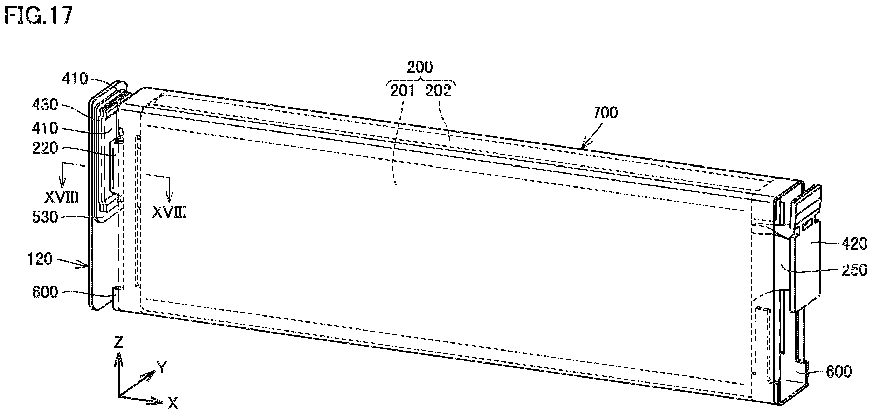

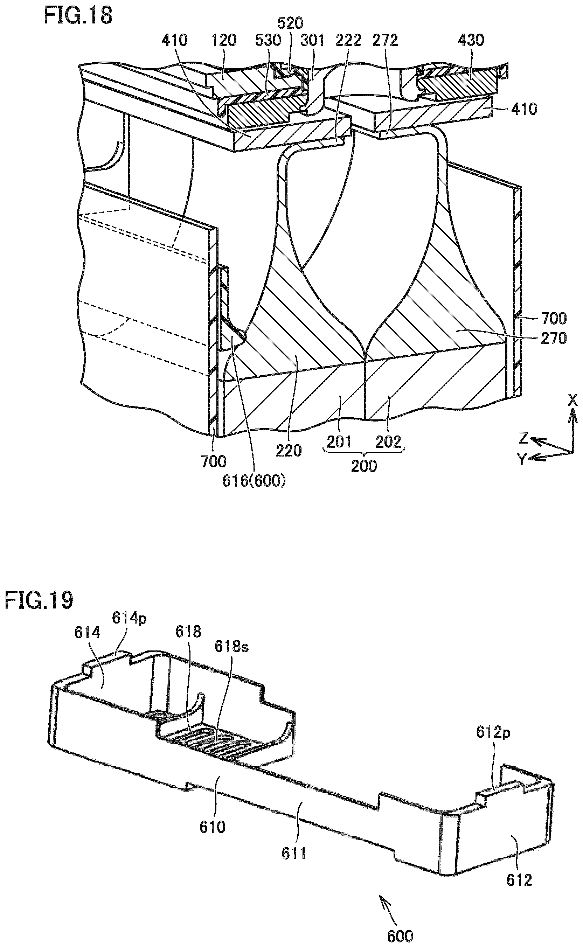

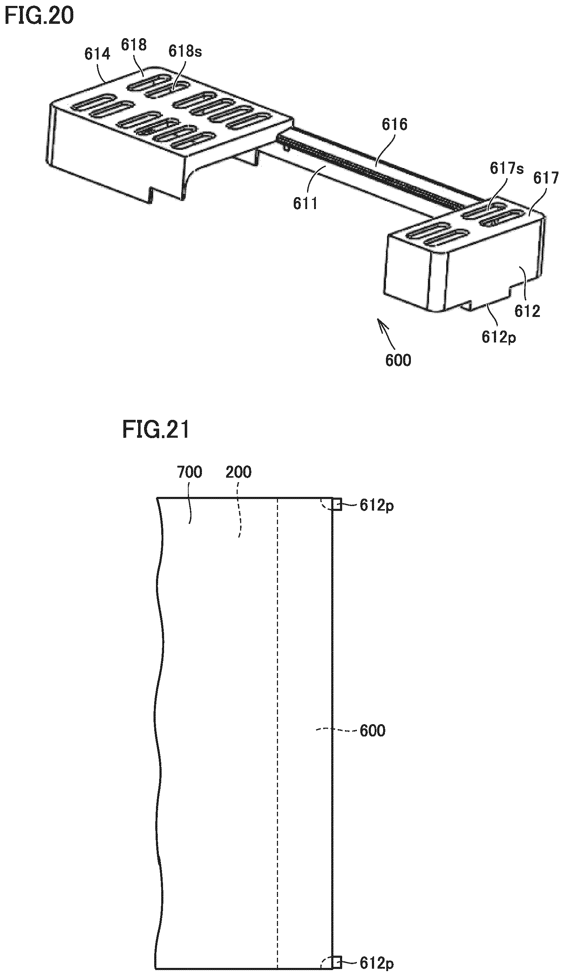

Fig. 17 is a perspective view showing a state of attaching sealing plate 120 to the current collectors on the negative electrode side. Fig. 18 is a cross sectional view of each of the electrode assemblies and the current collectors shown in Fig. 17 along XVIII-XVIII. Figs. 19 and 20 are first and second perspective views each showing an implementation of spacer 600, and Fig. 21 is a front view showing a positional relation between spacer 600 and insulating sheet 700. It should be noted that in Fig. 18, case main body 110 is not shown.

As shown in Figs. 19 and 20, spacer 600 is composed of a resin member having an insulating property. Spacer 600 includes: a first component 612 and a second component 614 each having three surrounding side walls; and a coupling wall 611 that couples one side wall of first component 612 and one side wall of second component 614 to each other. Protrusion 616 is provided on an inner side of coupling wall 611 so as to extend between first component 612 and second component 614 (in the Z direction).

First component 612 includes a first plate portion 617 provided to couple the three walls. First plate portion 617 is provided with a plurality of first through holes 617s each having an elliptical shape. The shape of each first through hole 617s and the number of first through holes 617s are appropriately selected, and are not limited to the shape and number shown. A first protrusion 612p protruding outward is provided in a region of first component 612 opposite to first plate portion 617 (side opposite to the electrode assembly).

Second component 614 includes a second plate portion 618 provided to couple the three walls. Second plate portion 618 is provided with a plurality of second through holes 618s each having an elliptical shape. The shape of each second through hole 618s and the number of second through holes 618s are appropriately selected, and are not limited to the shape and number shown. A second protrusion 614p protruding outward is provided in a region of second component 614 opposite to second plate portion 618 (side opposite to the electrode assembly).

Each of first plate portion 617 and second plate portion 618 described above is located on an end surface side of the electrode assembly. Each of these plate portions may be in abutment with the end surface of the electrode assembly, or when each of these plate portions is not in abutment with the end surface, the shortest distance to the electrode assembly is preferably 2 mm or less, and is more preferably 1 mm or less. Further, since first through hole 617s and second through hole 618s are provided, when secondary battery 1 shown in Fig. 1 is placed with the Z direction corresponding to the upward direction (such a direction that opening 113 (second opening) and opening 114 (first opening) at the both ends of case main body 110 are arranged on the left and right), even if the electrolyte solution pushed out from the electrode assembly flows to outside of the through holes during charging (generally, the electrode plate is expanded), the electrolyte solution can be readily returned to inside of the electrode assembly during discharging (generally, the electrode plate is contracted).

The outer size of spacer 600 (each of the first spacer and the second spacer) is preferably smaller than the outer size of electrode assembly 200. Since insulating sheet 700 is wound around electrode assembly 200 and is also wound around spacer 600, insertability of electrode assembly 200 of case main body 110 can be improved by making the outer size of spacer 600 smaller than that of electrode assembly 200.

As shown in Fig. 21, when electrode assembly 200 is covered with insulating sheet 700, spacer 600 is also preferably covered with insulating sheet 700. In this case, each of the negative electrode tab group and the positive electrode tab group passes internal to spacer 600, thereby protecting each of the negative electrode tab group and the positive electrode tab group by spacer 600. Further, since spacer 600 is also covered with insulating sheet 700, each of the negative electrode tab group and the positive electrode tab group is further protected. It should be noted that each of first protrusion 612p and second protrusion 614p provided in spacer 600 is desirably exposed from insulating sheet 700.

As shown in Figs. 13, 17, and 18, one current collector 410 and the other current collector 410 are electrically connected to negative electrode terminal 301 via current collector 430 after joining negative electrode tab group 220 to current collector 410, joining negative electrode tab group 270 to current collector 430, and overlapping first electrode assembly 201 and second electrode assembly 202 with each other (step S7). It should be noted that step S7 can be performed before step S6.

Specifically, negative electrode tab group 220 and negative electrode tab group 270 are folded such that tip portions 222, 272 face each other.

Each of negative electrode terminal 301 and current collector 430 is attached to sealing plate 120 with an insulating member being interposed therebetween. Current collector 430 is brought into abutment with one current collector 410 and the other current collector 410 in the X direction. It should be noted that the connecting of plate-shaped member 303 to negative electrode terminal 301 may be performed at any timing. Current collector 430 is joined to one current collector 410 and the other current collector 410 by laser welding from between sealing plate 120 and insulating sheet 700.

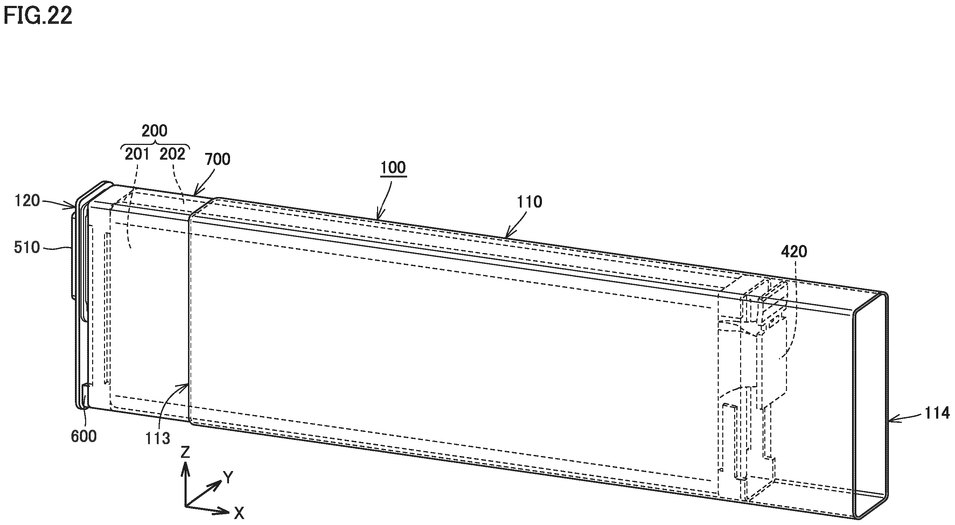

Fig. 22 is a perspective view showing a state of inserting the electrode assemblies into the case main body. As shown in Figs. 13 and 22, next, after overlapping first electrode assembly 201 and second electrode assembly 202 with each other, first electrode assembly 201 and second electrode assembly 202 are inserted into case main body 110 via opening 113 with the current collector 420 side being inserted first (step S8). On this occasion, at each of the end portions of first electrode assembly 201 and second electrode assembly 202 on the negative electrode tab 230 side, first electrode assembly 201 and second electrode assembly 202 may be inserted into case main body 110 with negative electrode active material layer 212 protruding to the negative electrode tab 230 side with respect to the end portion of positive electrode active material layer 242.

Negative electrode tab group 220 and negative electrode tab group 270 are curved by bringing sealing plate 120 close to the main body portion of electrode assembly 200 (first electrode assembly 201 and second electrode assembly 202). It should be noted that sealing plate 120 and case main body 110 are preferably brought close to each other by bringing sealing plate 120 close to the main body portion of electrode assembly 200 disposed in case main body 110. As shown in Fig. 11, negative electrode tab group 220 and negative electrode tab group 270 are curved along the shape of spacer 600 such that the folded portions of curved portions 221, 271 are close to case main body 110 in the Y direction.

After bringing sealing plate 120 into abutment with case main body 110, sealing plate 120 is temporarily joined to case main body 110. By the temporary joining, sealing plate 120 is partially joined to opening 113 of case main body 110. Thus, sealing plate 120 is positioned with respect to case main body 110.

When inserting electrode assembly 200 into case main body 110, electrode assembly 200 may be pulled from the current collector 420 side, or may be pushed from each of the current collector 410 side and the current collector 430 side. When electrode assembly 200 is pressed from each of the current collector 410 side and the current collector 430 side, negative electrode tab group 220 and negative electrode tab group 270 can be curved at the same time.

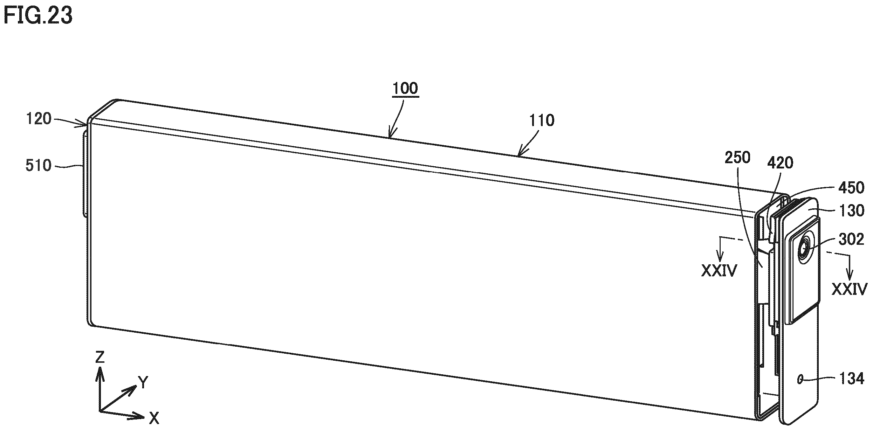

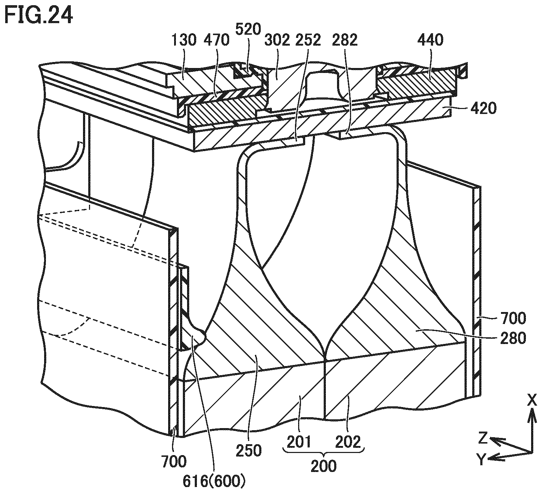

Fig. 23 is a perspective view showing a state of attaching sealing plate 130 to the current collectors on the positive electrode side. Fig. 24 is a cross sectional view of each of the electrode assemblies and the current collectors shown in Fig. 23 along XXIII-XXIII. In Fig. 24, case main body 110 is not shown.

As shown in Figs. 13, 22 and 23, current collector 420 is electrically connected to positive electrode terminal 302 after inserting first electrode assembly 201 and second electrode assembly 202 into case main body 110 (step S9).

Specifically, each of positive electrode terminal 302 and current collector 450 is attached to sealing plate 130 with an insulating member being interposed therebetween. After inserting first electrode assembly 201 and second electrode assembly 202 into case main body 110, current collector 450 is brought into abutment, in the X direction, with current collector 420 protruding from opening 114. The connecting of plate-shaped member 304 to positive electrode terminal 302 may be performed at any timing.

As shown in Fig. 24, positive electrode tab group 250 and positive electrode tab group 280 connected to current collector 420 are folded such that tip portions 252, 282 face each other. From the state shown in Fig. 24, sealing plate 130 is brought into abutment with case main body 110. On this occasion, positive electrode tab group 250 and positive electrode tab group 280 are curved by bringing sealing plate 130 and the main body portion of electrode assembly 200 close to each other. As shown in Fig. 12, positive electrode tab group 250 and positive electrode tab group 280 are curved along the shape of spacer 600 such that the folded portions of curved portions 251, 281 are close to case main body 110 in the Y direction.

After sealing plate 130 is brought into abutment with case main body 110, sealing plate 130 is temporarily welded to case main body 110. By the temporary joining, sealing plate 1 30 is partially joined to opening 114 of case main body 110. Thus, sealing plate 130 is positioned with respect to case main body 110.

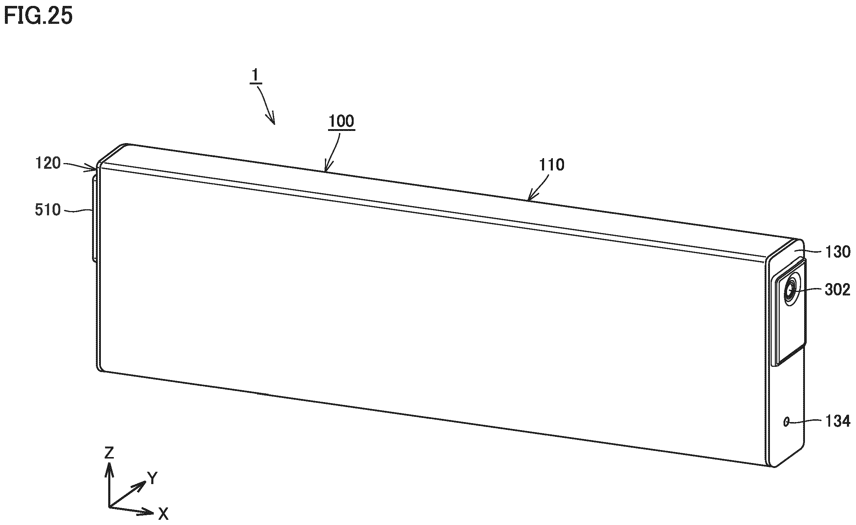

Fig. 25 is a perspective view showing the configuration of secondary battery 1. As shown in Figs. 13 and 25, next, sealing plate 120 and sealing plate 130 are joined to case main body 110 (step S10). Sealing plate 120 seals opening 113 of case main body 110, and sealing plate 130 seals opening 114 of case main body 110. Thus, first electrode assembly 201 and second electrode assembly 202 are accommodated in case 100.

After the above-described steps, an inspection such as a leakage inspection is performed (step S 11). After the leakage inspection, secondary battery 1 is dried to remove moisture in case 100. Then, the electrolyte solution is injected into case 100 through injection hole 134. When injecting the electrolyte solution, case 100 is inclined with sealing plate 130 facing upward and sealing plate 120 facing downward, thereby injecting the electrolyte solution into case 100 via injection hole 134 of sealing plate 130. Thereafter, charging is performed to result in release of gas. For performing the charging to result in release of gas, injection hole 134 may be temporarily sealed. Thereafter, injection hole 134 is sealed, thereby completing secondary battery 1.

The order of the step of inserting electrode assembly 200 and the step of connecting the current collectors is not limited to the above-described example. For example, after only a portion of electrode assembly 200 is inserted into case main body 110 with the end portion of negative electrode active material layer 212 on the opening 113 side being disposed outside case main body 110 (first step), negative electrode terminal 301 (second electrode terminal) provided on sealing plate 120 (second sealing plate) and negative electrode tab groups 220, 270 (second electrode tab) may be electrically connected to each other, and then electrode assembly 200 may be inserted into case main body 110 until the end portion of negative electrode active material layer 212 on the opening 113 side is disposed inside case main body 110 (second step). That is, negative electrode terminal 301 and electrode assembly 200 can be electrically connected to each other during the step of inserting electrode assembly 200 into case main body 110.

In the present embodiment, since first electrode assembly 201 is provided with negative electrode tab group 220 and positive electrode tab group 250 and second electrode assembly 202 is provided with negative electrode tab group 270 and positive electrode tab group 280, first electrode assembly 201 and second electrode assembly 202 can be configured to have separate electrode tabs.

With this configuration, the electrode tabs can be shortened as compared with a case where one collective electrode tab is formed by first electrode assembly 201 and second electrode assembly 202 and the electrode tab is bent.

As a result, the occupied volume of the electrode tabs can be reduced, thereby improving the energy density of secondary battery 1. Further, in the configuration in which the separate electrode tabs are respectively provided for first electrode assembly 201 and second electrode assembly 202, the electrode tabs are readily bent and the electrode tabs and the current collectors can be therefore readily joined as compared with the case where one collective electrode tab is formed by first electrode assembly 201 and second electrode assembly 202, with the result that the secondary battery can be stably manufactured. In particular, since secondary battery 1 can be stably manufactured, reliability of the connection portion between each of the electrode tabs and each of the current collectors can be increased.

### (Current Collector 420, Current Collector 440, First Insulating Member 460, and Second Insulating Member 470)

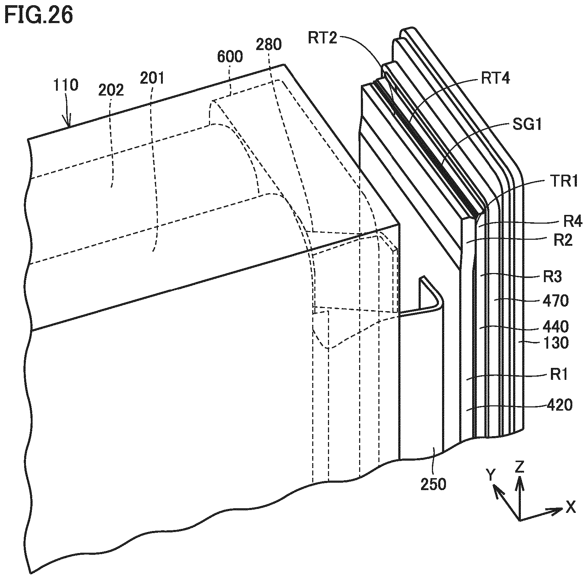

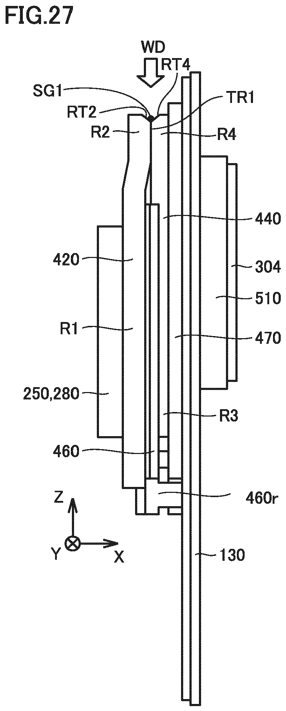

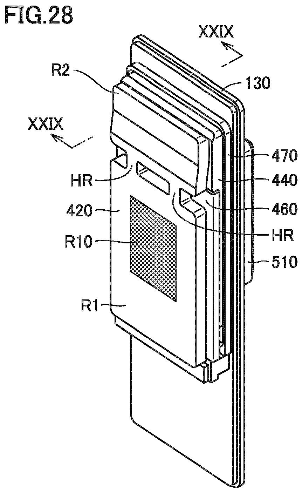

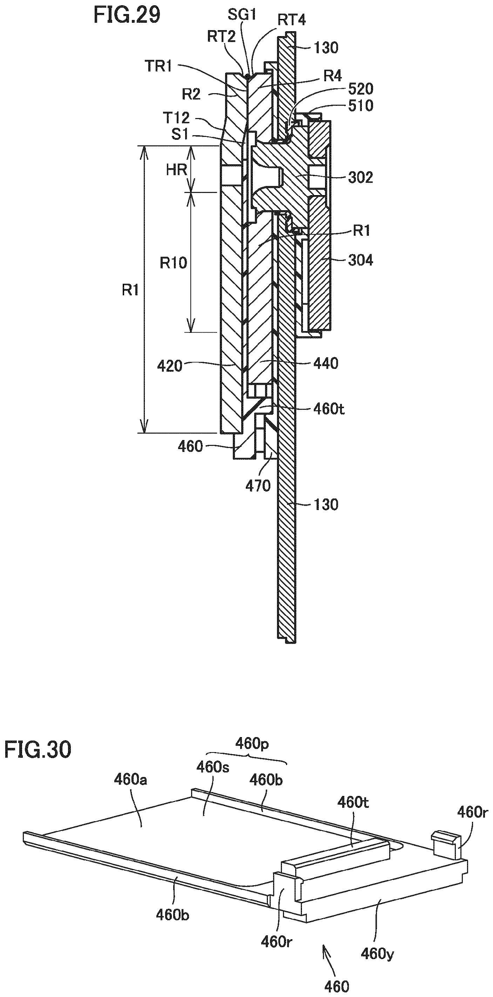

Next, specific configurations of current collector 420 (first current collecting member), current collector 440 (second current collecting member), first insulating member 460, and second insulating member 470 will be described with reference to Figs. 26 to 31. Fig. 26 is a perspective view showing a state before the sealing plate is fixed to the case main body, Fig. 27 is a side view showing the current collecting structure on the positive electrode side, Fig. 28 is a perspective view of the configuration shown in Fig. 27, Fig. 29 is a cross sectional view along XXIX-XXIX in Fig. 28, Fig. 30 is a perspective view of first insulating member 460, and Fig. 31 is a perspective view of second insulating member 470.

Referring to Figs. 26 to 29, current collector 420 (first current collecting member) is a plate-shaped member having a long-side direction in the Z axis direction and a short-side direction in the Y axis direction. Current collector 420 includes a first region R1 and a second region R2. Aluminum or an aluminum alloy may be used for current collector 420.

As with current collector 420, current collector 440 (second current collecting member) is also a plate-shaped member having a long-side direction in the Z axis direction and a short-side direction in the Y axis direction. Current collector 440 includes a third region R3 and a fourth region R4. Aluminum or an aluminum alloy may be used for current collector 440.

In current collector 440, a difference between a surface of third region R3 on the electrode assembly 200 side and a surface of fourth region R4 on the electrode assembly 200 side in the direction perpendicular to sealing plate 130 may be ±0.5 mm or less (substantially flat).

First insulating member 460 is disposed between first region R1 of current collector 420 and third region R3 of current collector 440.

As shown in Fig. 27, in the direction (X direction) perpendicular to sealing plate 130, a surface of second region R2 on the sealing plate 130 side is provided to be located on the sealing plate 130 side with respect to a surface of first region R1 on the sealing plate 130 side. In order to obtain this structure, current collector 420 may be formed by bending.

With this configuration, second region R2 and fourth region R4 can be joined to each other, and first insulating member 460 can be disposed between first region R1 and the third region. With this configuration, the position of current collector 420 with respect to current collector 440 becomes stable, the joining portion between second region R2 and fourth region R4 can be stably formed, and the joining portion between second region R2 and fourth region R4 can be suppressed from being damaged. Therefore, the secondary battery having a highly reliable connection structure between the current collecting portions can be obtained. Further, since positive electrode tab group 250 is connected to first region R1 of current collector 420, the structure of the current collecting portion can be readily reduced in space, with the result that a secondary battery having a higher volume energy density can be stably manufactured. It should be noted that positive electrode tab group 250 is preferably bent and connected to the surface of first region R1 on the electrode assembly 200 side.

Second insulating member 470 is disposed between sealing plate 130 and current collector 440 as another insulating member different from first insulating member 460. Although details of the configuration of first insulating member 460 will be described later, first insulating member 460 is provided with a protruding portion 460r protruding toward the sealing plate 130 side, and protruding portion 460r is engaged with an engagement groove 470a provided in second insulating member 470, thereby connecting and fixing first insulating member 460 to second insulating member 470. It should be noted that protruding portion 460r may be brought into abutment with sealing plate 130.

In the present embodiment, the connection-fixing structure in which protruding portion 460r is provided in first insulating member 460 and engagement groove 470a is provided in second insulating member 470 is employed; however, the engagement groove may be provided in first insulating member 460, and the protruding portion may be provided in second insulating member 470. Further, the connection-fixing structure is not limited to the structure of the present embodiment, and a known fixing structure, such as claw fitting or adhesion, may be employed.

A first abutment portion TR1 in which second region R2 and fourth region R4 are in abutment with each other is provided between second region R2 of current collector 420 and fourth region R4 of current collector 440. Further, a joining portion SG1 joined by welding WD is provided at an end portion (upper end portion in the figure) of first abutment portion TR1. Since first abutment portion TR1 is provided, the end portion of first abutment portion TR1 can be stably welded. Further, after joining portion SG1 is formed, occurrence of unsteadiness of first abutment portion TR1 can be suppressed even when a load is applied to first abutment portion TR1.

For the welding, welding using a high energy radiation is preferable, and laser welding using laser light is more preferable. Thus, it is possible to form joining portion SG1 with high reliability in joining. On this occasion, when the high energy radiation is applied from the side surface side (upper side in Fig. 29) of each of current collector 420 and current collector 440, a first chamfered portion RT2 at the tip portion of second region R2 and a second chamfered portion RT4 at the tip portion of fourth region R4 preferably form a V-shaped receiving portion because joining portion SG1 can be readily formed. It should be noted that joining portion SG1 may be formed between second region R2 and fourth region R4 through penetration welding by applying the high energy radiation to one region (current collector).

In the step of forming joining portion SG1, joining portion SG1 is formed in the following manner: after electrode assembly 200 is inserted into case main body 110, the laser light is applied to the chamfered portion of at least one of current collector 420 and current collector 440 from between case main body 110 and sealing plate 130 in the step of joining current collector 420 and current collector 440. It should be noted that current collector 420 and current collector 440 may be connected to each other before electrode assembly 200 is inserted into case main body 110.

Current collector 420 has an inclined portion T12 between first region R1 and second region R2, and a first clearance S1 is provided between inclined portion T12 and current collector 440. This first clearance S1 becomes gradually smaller toward second region R2. Further, first clearance S1 has a region in which first insulating member 460 is not disposed. By providing first clearance S1 in this way, heat generated when forming joining portion SG1 can be suppressed from being transferred to each of the first region R1 side and the third region R3 side, thereby stably forming joining portion SG1 and reducing the heat to be transferred to positive electrode tab group 250, 280, electrode assembly 200, and other conductive members.

Further, first clearance S1 described above may be provided in the vicinity of the end portion of first abutment portion TR1 opposite to the end portion at which joining portion SG1 is formed. By providing first clearance S1, heat generated when forming joining portion SG1 can be suppressed from being transferred to each of the first region R1 side and the fourth region R4 side, thereby stably forming joining portion SG1.

Further, as shown in Fig. 28, current collector 420 in the present embodiment is provided with a fuse portion HR. Fuse portion HR is preferably provided in first region R1 of current collector 420 at a position located on the second region R2 side with respect to the region (region indicated by R10) to which positive electrode tab group 250, 280 is connected. Preferably, fuse portion HR may face first insulating member 460. It should be noted that fuse portion HR may be provided in inclined portion T12.

Fuse portion HR is a portion to be melted and disconnected when a large amount of current (for example, a current that flows upon occurrence of an external short circuit or the like) flows in current collector 420. Fuse portion HR is preferably a portion having a part with a cross sectional area smaller than its surroundings. An implementation of fuse portion HR can be constituted of a region in which a lateral cross sectional area of current collector 420 is made smaller by a through hole, a thin thickness, a notch, a groove, or the like. As fuse portion HR, the same structure may be provided in current collector 440, rather than current collector 420. It should be noted that current collector 420 is particularly preferably provided in first region R1 disposed to be separated from current collector 440.

When a large amount of current flows, fuse portion HR is melted and disconnected to block the large amount of current, but electric conduction between a portion of current collector 420 to which positive electrode tab group 250 is connected and a portion of current collector 440 to which positive electrode terminal 302 is connected is preferably avoided from being attained again after fuse portion HR is melted and disconnected. In the present embodiment, since first insulating member 460 is interposed between first region R1 of current collector 420 and third region R3 of current collector 440, it is possible to suppress the possibility of attaining the electric conduction therebetween again even after fuse portion HR is operated.

Next, a detailed structure of first insulating member 460 will be described with reference to Fig. 30. First insulating member 460 includes a plate portion 460a having a flat plate shape. Plate portion 460a has a bottom surface 460s and a pair of side wall portions 460b respectively provided at edge portions of bottom surface 460s on both sides thereof. A recess 460p is defined by bottom surface 460s and the pair of side wall portions 460b. The thickness of bottom surface 460s is not limited, but is preferably about 0.5 mm to 1.0 mm, for example.

Recess 460p on one side in a direction intersecting a direction in which the pair of side wall portions 460b are provided is opened, and a first protrusion 460t is respectively provided on the other side thereof. Further, protruding portions 460r are provided at edge portions of plate portion 460a on both sides on a side away from bottom surface 460s with respect to first protrusion 460t. Each of protruding portions 460r is implemented to have a shape of hook. Further, plate portion 460a is provided with a second protrusion 460y extending in a direction opposite to a direction in which protruding portion 460r extends.

It should be noted that the recess may be provided in a surface of plate portion 460a on the current collector 420 side, and at least a portion of current collector 420 may be disposed in the recess.

A surface of plate portion 460a on the sealing plate 130 side is preferably in abutment with third region R3 of current collector 440. Further, a surface of plate portion 460a on the electrode assembly 200 side is preferably in abutment with first region R1 of current collector 420.

Next, a detailed structure of second insulating member 470 will be described with reference to Fig. 31. The second insulating member includes a plate portion 470p having a flat plate shape. Plate portion 470p is provided with a through hole 470h through which positive electrode terminal 302 passes. Further, engagement grooves 470a with which protruding portions 460r provided in first insulating member 460 are engaged are provided on both edge portions of plate portion 470p on one end side. The thickness of plate portion 470p is not limited, but is preferably about 0.5 mm to 1.0 mm, for example.

As the implementations of protruding portion 460r and engagement groove 470a, other known engagement structures can be employed and the implementations are not limited to those in the present embodiment as long as first insulating member 460 and second insulating member 470 are connected and fixed by the engagement between protruding portion 460r and engagement groove 470a. It should be noted that the connection between first insulating member 460 and second insulating member 470 is not necessarily essential.

Referring again to Figs. 29 and 30, in a state in which current collector 420, first insulating member 460, current collector 440, and second insulating member 470 are fixed to sealing plate 130, at least a portion of current collector 440 is accommodated in recess 460p of first insulating member 460, and current collector 440 is positioned by first protrusion 460t of first insulating member 460. Further, since protruding portion 460r provided in first insulating member 460 is engaged with engagement groove 470a of the second insulating member, current collector 440 is fixed with current collector 440 being sandwiched between first insulating member 460 and second insulating member 470.

Further, the end portion of first region R1 of current collector 420 is preferably in abutment with and positioned by second protrusion 460y provided in first insulating member 460. As a result, relative positions of current collector 420 and current collector 440 are more stably fixed, thereby attaining stable joining state at first abutment portion TR1 between second region R2 of current collector 420 and fourth region R4 of current collector 440.

### (Other Embodiments)

Other implementations of second region R2 of current collector 420 and fourth region R4 of current collector 440 will be described with reference to Figs. 32 to 36. Figs. 32 to 36 are first to fifth perspective views each showing another implementation of the joining portion between second region R2 of current collector 420 and fourth region R4 of current collector 440.

In the implementation of the joining portion shown in Fig. 32, fourth region R4 of current collector 440 is provided to be separated from second insulating member 470 as compared with the manner of joining as shown in Fig. 26. Also in this implementation of the joining portion, the operation of joining second region R2 and fourth region R4 can be readily performed because joining portion SG1 is oriented in the Z direction. Furthermore, since joining portion SG1 is separated from second insulating member 470, second insulating member 470 can be suppressed from being damaged due to an influence of heat.

In the implementation of the joining portion shown in Fig. 33, second region R2 of current collector 420 is bent perpendicularly to the electrode assembly 200 side, and fourth region R4 of current collector 440 is also bent perpendicularly to the electrode assembly 200 side along second region R2. As a result, an overlapping region R11 is provided between second region R2 and fourth region R4, and joining portion SG1 is formed in this region. With this implementation of the joining portion, the operation of joining second region R2 and fourth region R4 can be readily performed because joining portion SG1 is oriented in the Z direction. Further, since joining portion SG1 is separated from second insulating member 470, second insulating member 470 can be suppressed from being damaged due to an influence of heat. Further, a formation area of joining portion SG1 can be large.

In the implementation of the joining portion shown in Fig. 34, second region R2 of current collector 420 is bent to protrude to the electrode assembly 200 side, and fourth region R4 of current collector 440 is also bent to the electrode assembly 200 side along second region R2. As a result, an overlapping region R11 between second region R2 and fourth region R4 is provided to be inclined with respect to sealing plate 130, and joining portion SG1 is formed in this region R11. With this implementation of the joining portion, the operation of joining second region R2 and fourth region R4 can be readily performed because joining portion SG1 is oriented obliquely with respect to the Z direction. Further, since joining portion SG1 is separated from second insulating member 470, second insulating member 470 can be suppressed from being damaged due to an influence of heat.

In the implementation of the joining portion shown in Fig. 35, second region R2 of current collector 420 is provided to extend in the Z direction so as to be located close to the electrode assembly 200 side with respect to first region R1, and fourth region R4 of current collector 430 is also provided to extend in the Z direction along second region R2. Further, the end portion of fourth region R4 is provided to protrude with respect to the end portion of second region R2. As a result, joining portion SG1 can be formed at fourth region R4 protruding with respect to second region R2, with the result that the welding operation can be readily performed in an oblique direction. Further, since joining portion SG1 is separated from second insulating member 470, second insulating member 470 can be suppressed from being damaged due to an influence of heat.

In the implementation of the joining portion shown in Fig. 36, second region R2 of current collector 420 is provided with a first extension portion R21 extending obliquely upward from its tip to the electrode assembly 200 side, fourth region R4 of current collector 440 is separated from second insulating member 470 so as to be in contact with second region R2, and the tip portion of fourth region R4 is provided with a second extension portion R41 bent toward second insulating member 470. As a result, a receiving portion having a V-shaped cross section is formed by first extension portion R21 and second extension portion R41. Since the receiving portion is formed in this way, joining portion SG1 can be formed in the receiving portion, with the result that the welding operation can be readily performed. Further, since joining portion SG1 is separated from second insulating member 470, second insulating member 470 can be suppressed from being damaged due to an influence of heat.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A secondary battery comprising:
an electrode assembly (200) including a first electrode and a second electrode having a polarity different from a polarity of the first electrode;
a case main body (110) that accommodates the electrode assembly (200) and that is provided with a first opening (114);
a first sealing plate (130) that seals the first opening (114);
a first electrode tab (250, 280) electrically connected to the first electrode;
a first current collecting member (420) electrically connected to the first electrode tab (250, 280);
a second current collecting member (440) joined to the first current collecting member (420); and
a first electrode terminal (302) electrically connected to the second current collecting member (440) and provided on the first sealing plate (130), wherein
the first current collecting member (420) includes a first region (R1) and a second region (R2),
the second current collecting member (440) includes a third region (R3) and a fourth region (R4),
the first electrode tab (250, 280) is connected to the first region (R1),
the second region (R2) and the fourth region (R4) are joined to each other, and
a first insulating member (460) is disposed between the first region (R1) and the third region (R3).

2. The secondary battery according to claim 1, wherein
the first insulating member (460) has a protruding portion (460r) protruding to the first sealing plate (130) side, and
the protruding portion (460r) is in abutment with the first sealing plate (130) or another insulating member (470) disposed on the first sealing plate (130).

3. The secondary battery according to claim 2, wherein
a second insulating member (470) is disposed between the first sealing plate (130) and the second current collecting member (440),
the other insulating member (470) is the second insulating member (470), and
the protruding portion (460r) is in abutment with the second insulating member (470).

4. The secondary battery according to claim 3, wherein the first insulating member (460) is connected and fixed to the second insulating member (470).

5. The secondary battery according to any one of claims 1 to 4, wherein
the case main body (110) is provided with a second opening (113) at a position facing the first opening (114), and the second opening (113) is sealed by a second sealing plate (120),
a second electrode terminal electrically connected to the second electrode is provided on the second sealing plate (120), and
the first electrode tab (250, 280) is provided at an end portion of the electrode assembly (200) on the first sealing plate (130) side, and a second electrode tab (220, 270) electrically connected to the second electrode is provided at an end portion of the electrode assembly (200) on the second sealing plate (120) side.

6. The secondary battery according to any one of claims 1 to 5, comprising a first abutment portion (TR1) at which the second region (R2) and the fourth region (R4) are in abutment with each other, wherein
a joining portion (SG1) at which the first current collecting member (420) and the second current collecting member (440) are joined to each other is provided at an end portion of the first abutment portion (TR1).

7. The secondary battery according to any one of claims 1 to 6, wherein
in a direction perpendicular to the first sealing plate (130),
a surface of the second region (R2) on the first sealing plate (130) side is located on the first sealing plate (130) side with respect to a surface of the first region (R1) on the first sealing plate (130) side.

8. The secondary battery according to any one of claims 1 to 7, wherein
the first insulating member (460) includes a plate portion (460a),
the plate portion (460a) is provided with a recess (460p), and
at least a portion of the first current collecting member (420) or the second current collecting member (440) is disposed in the recess (460p).

9. The secondary battery according to any one of claims 1 to 8, wherein
the first current collecting member (420) has an inclined portion (T12) between the first region (R1) and the second region (R2),
a clearance (S1) formed between the inclined portion (T12) and the second current collecting member (440) becomes gradually smaller toward the second region (R2), and
the clearance (S1) has a region in which the first insulating member (460) is not disposed.

10. The secondary battery according to any one of claims 1 to 9, wherein a fuse portion (HR) is provided in the first current collecting member (420) or the second current collecting member (440).

11. The secondary battery according to any one of claims 1 to 10, wherein
in a direction perpendicular to the first sealing plate (130),
a difference between a surface of the third region (R3) on the electrode assembly (200) side and a surface of the fourth region (R4) on the electrode assembly (200) side is ±0.5 mm or less.
